# EUROPÄISCHE PATENTSCHRIFT

(11) **EP 2 223 817 B1**
(45) Veröffentlichungstag und Bekanntmachung des Hinweises auf die Patenterteilung: **25.01.2017**
(21) Anmeldenummer: 10001548.6
(22) Anmeldetag: 16.02.2010
(51) Int. Cl.: B60J 7/185

(54) **Verschlussvorrichtung für ein Cabriolet-Dach**
Locking device for a cabriolet roof
Dispositif de fermeture pour un toit du type cabriolet

(30) Priorität: 27.02.2009 DE 102009010721
(43) Veröffentlichungstag der Anmeldung: 01.09.2010
(73) Patentinhaber: AUDI AG, 85045 Ingolstadt (DE)
(72) Erfinder: Schumacher, Thorsten, 25495 Kummerfeld (DE); Blech, Christof, 71272 Renningen (DE)
(74) Vertreter: Engelhardt, Harald

(56) Entgegenhaltungen:
- EP-A2- 1 072 456
- DE-A1-102006 055 609
- DE-C1- 10 160 096

## Beschreibung

Die Erfindung bezieht sich auf eine Verschlussvorrichtung für ein bewegliches Dach eines Personenkraftwagens, nach dem Oberbegriff des Patentanspruchs 1.

Es ist eine Zuzieh- und Verriegelungsvorrichtung zum lösbaren Verbinden eines Fahrzeugdachs mit einem Karosseriebauteil bekannt, EP 1 072 456 B1. Das Fahrzeugdach ist zwischen einer Schließstellung und einer Offenstellung bewegbar, und die Zuzieh- und Verriegelungsvorrichtung ist mit einem Gehäuse versehen, an dem ein Verschlusshaken gelagert und ein Zentrierbolzen befestigt ist. Der Zentrierbolzen greift in eine Verriegelungsöffnung eines Schließteils ein.

Aus der WO 92/15466 A1 geht ein Schlossmechanismus für ein Faltverdeck eines Personenkraftwagens hervor. Dieser Schlossmechanismus ist an einer Vorderseite des Faltverdecks angeordnet und wirkt mit einem benachbarten Querträger eines Windschutzscheibenrahmens zusammen. Gebildet wird der Schlossmechanismus durch beiderseits einer Mittellängsebene des Personenkraftwagens angeordnete Verschlussorgane mit Verschlusshaken. Letztere werden mittels eines Elektromotors betätigt. An einem Träger des Verschlussmechanismus sind die Verschlusshaken und Fixierungszapfen angebracht. Jeder Fixierungszapfen wird unter Vermittlung einer Verschraubung in Lage gehalten.

Die DE 1 580 535 gibt ein Verdeck für ein Kraftfahrzeug wieder. Das Verdeck weist benachbart eines Windschutzscheibenrahmens einen profilierten Träger auf, an dessen -in Fahrtrichtung gesehen-, vorderem Profilabschnitt ein Zapfen mittels einer Schraube gehalten ist. Der Zapfen ragt in eine Aufnahmeöffnung des Windschutzscheibenrahmes hinein und fixiert das Verdeck an ihm.

Aufgabe der Erfindung ist es, eine Verschlussvorrichtung für ein bewegliches Dach eines Personenkraftwagens in der Weise auszubilden, dass vor allem aufgrund einer gezielten Auslegung des Fixierungszapfens sich die Verschlussvorrichtung durch gute Funktion auszeichnet. Dabei sollte der Fixierungszapfen hohen Belastungen standhalten und leicht zu realisieren sein.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Verschlussvorrichtung des beweglichen Dachs mit ihrem Zentrierzapfen am Aufnahmekörper Beispiel gebend mit dem oberen Querträger des Windschutzscheibenrahmens zusammenwirkt. Dazu trägt der Zentrierzapfen aufgrund seiner spezifischen Gestaltung -formsteif und plastisch verformbar- in besonderem Maße bei. Bei der Einführung des Fixierzapfens in die Ausnehmung im Querträger nimmt der Werkstoff auch relativ große Toleranzen auf und der besagte Fixierzapfen ist beim Betrieb des Personenkraftwagens weitgehend geräuschfrei in der Ausnehmung festgelegt. Der aus geeignetem Kunststoff bestehende Fixierzapfen ist auf einfache Weise stoff- und/oder kraftschlüssig an dem aus Metall bestehenden Lagerkörper angeformt, und zwar durch Umgießen, Umspritzen, Umschäumen oder einem vergleichbaren Herstellungsverfahren. Als vorteilhaft hervorzuheben ist in diesem Zusammenhang, dass sich ein Steg des Lagerkörpers aus Festigkeitsgründen in einem Schaft des Fixierzapfens erstreckt d.h. der Werkstoff des Fixierzapfens umgibt zumindest bereichsweise den Steg. Eine musterhafte Anordnung des Fixierzapfens wird erreicht, wenn der Fixierzapfen an winkelförmig zueinander verlaufenden Seiten des Körperabschnitts angeformt ist und mit einem ersten Zentrierwandabschnitt und einem zweiten Zentrierwandabschnitt die Außenwand und die Innenwand des Körperabschnitts des Lagerkörpers umgibt.

In der Zeichnung wird ein Ausführungsbeispiel der Erfindung gezeigt, das nachstehend näher erläutert wird.

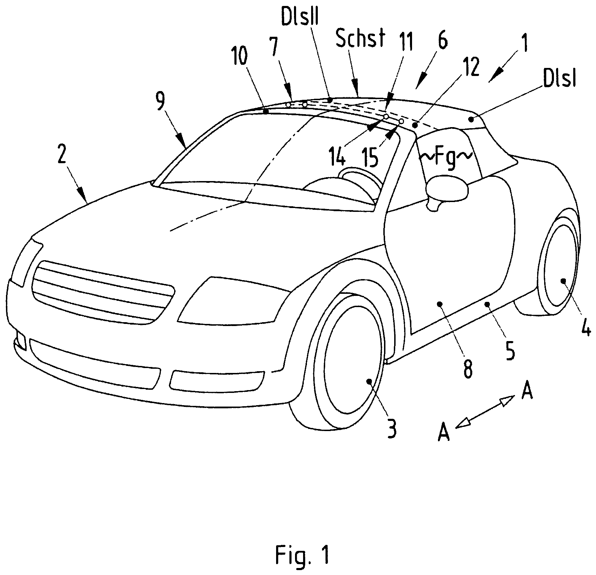

Es zeigen
Fig. 1 eine Schrägansicht von vorne links oben auf einen Personenkraftwagen mit einem eine Verschlussvorrichtung aufweisenden beweglichen Dach,

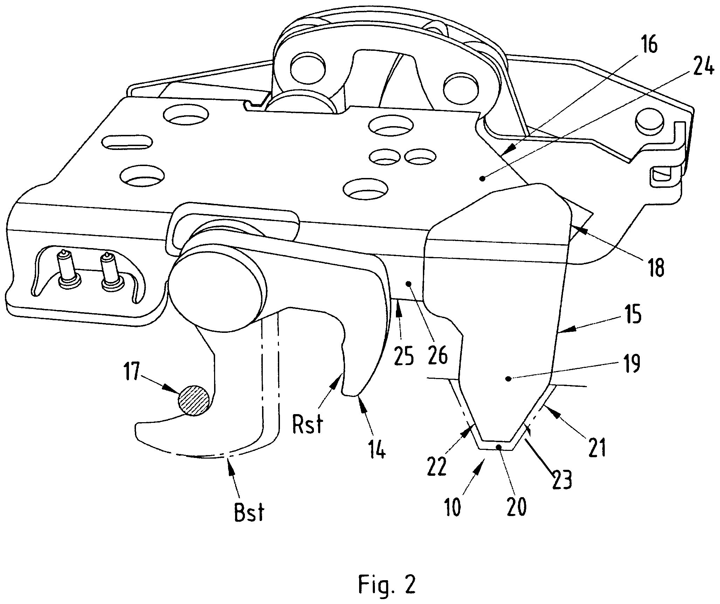

Fig. 2 eine Schrägansicht von vorne links oben auf die Verschlussvorrichtung gemäß Fig. 1,
Fig. 3 eine Ansicht von oben auf die Verschlussvorrichtung,

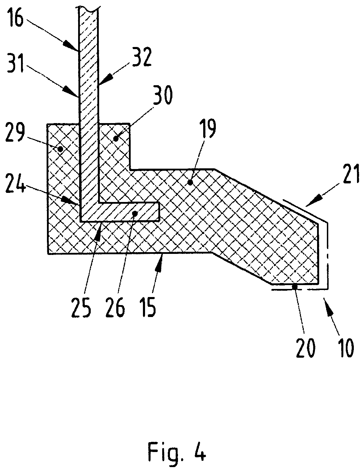

Fig. 4 einen in etwa schematischen Schnitt nach der Linie IV-IV der Fig. 3 in größerem Maßstab.

Ein Personenkraftwagen 1 umfasst einen Aufbau 2, der von Rädern 3 und 4 getragen wird und einen Grundkörper 5 und ein von einer Schließstellung Schst in eine Offenstellung -nicht gezeigt- bewegliches Dach 6 umfasst, das als Faltverdeck 7 ausgebildet ist. Am Grundkörper 5 gehalten sind Seitentüren 8 und ein Windschutzscheibenrahmen 9, der einen oberen Querträger 10 besitzt. Mit dem Querträger 10 verbunden ist ein vorderer Bereich 11, z.B. eine Dachkappe 12, des einen Fahrgastraum Fg in der Schließstellung Schst überspannenden Faltverdecks 7.

Zwischen dem Dach 6 und dem oberen Querträger 10 des Windschutzscheibenrahmens 9 ist in der Schließstellung Schst des Dachs 6 eine Verschlussvorrichtung 13 wirksam, die benachbart von Dachlängsseite Dlsl und Dlsll jeweils einen Verschlusshaken 14 und einen Zentrierzapfen 15 besitzt. Der Verschlusshaken 14 ist schwenkbeweglich an einem Lagerkörper 16 am Dach 6 bzw. an der Dachkappe 12 angeordnet und von einer Ruhestellung Rst in eine Betriebstellung Bst und vice versa verstellbar, wobei der Verschlusshaken 14 in der Betriebstellung Bst einen in Fahrzeuglängsrichtung A-A ausgerichteten Schließbolzen 17 lagefixiert umgreift. An dem aus hochfestem Werkstoff - Metall, Kunststoff oder dgl. - bestehenden Lagerkörper 16 ist der Zentrierzapfen 15 fest und/oder unlösbar angebracht, der einen Halteabschnitt 18 und einen Schaft 19 besitzt. Der Schaft 19 ragt in eine Ausnehmung 20 des oberen Querträgers 10 des Windschutzscheibenrahmens 9 ein. Der mit dem Halteabschnitt 18 am Lagerkörper 16 angeordnete Zentrierzapfen 15 besteht aus einem zwar formsteifen, jedoch in definiertem Umfang plastisch verformbaren Kunststoff. Und der Schaft 19 verjüngt sich in Richtung Aufnahmekörper 21, welcher Schaft 19 mit einer ersten Verjüngung 22 an eine zweite Verjüngung 23 des Aufnahmekörpers angepasst ist. Die Verjüngungen 22 und 23 sind keilförmig gestaltet, wobei auch denkbar ist, sie mit unterschiedlichen keilförmigen Abschnitten zu versehen.

Der Zentrierzapfen 15 ist stoff- und oder kraftschlüssig mit dem Lagerkörper 16 verbunden. Dies ist dadurch realisierbar, dass der Zentrierzapfen 15 durch Umgießen, Umspritzen, Umschäumen am Lagerkörper 16 angeformt bzw. hergestellt ist. Der Lagerkörper 16 ist von plattenartiger Art und umfasst einen flächigen Körperabschnitt 24, der einen Steg 25 besitzt. Der Steg 25 kann durch einen abgewinkelten Begrenzungsflansch 26 gebildet werden und ragt in den Schaft 19 des Zentrierzapfens 18 hinein d.h. der Werkstoff des Zentrierzapfens 15 umgibt diesen Steg 25.

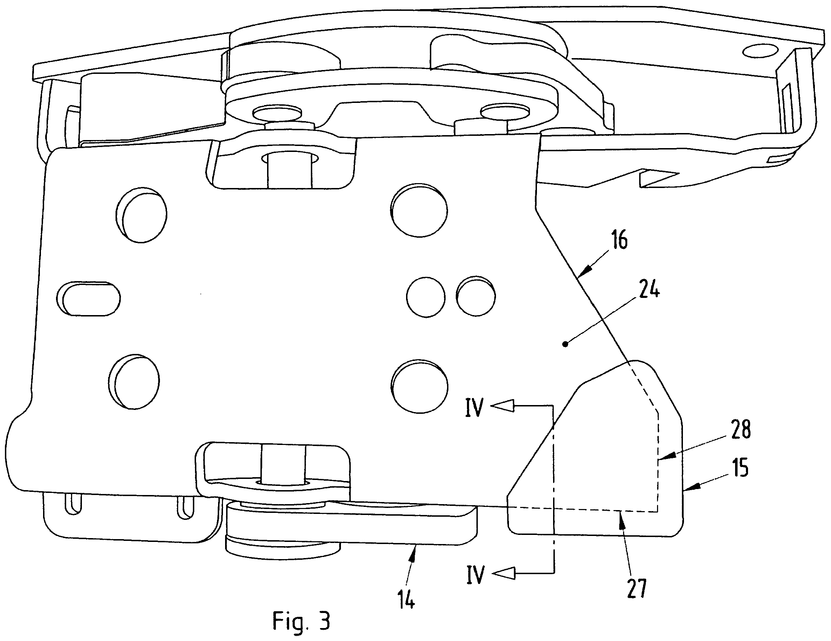

Gemäß Fig. 3 ist der Zentrierzapfen 15 an im Winkel zueinander verlaufenden Seiten 27 und 28 des Lagerkörpers 16 bzw. des Körperabschnitts 24 angeformt, wobei der Zentrierzapfen 15 mit einem ersten Zentrierwandabschnitt 29 und einem zweiten Zentrierwandabschnitt 30 eine Außenwand 31 und eine Innenwand 32 des Lagerkörpers 16 bzw. des Körperabschnitts 24 unmittelbar umgibt.

## Patentansprüche

1. Verschlussvorrichtung für ein bewegliches Dach eines Personenkraftwagens, das an einem Aufbau zwischen einer Schließstellung sowie einer Offenstellung verstellbar ist und in der Schließstellung mittels der Verschlussvorrichtung an einem oberen Querträger (10) eines Windschutzscheibenrahmens (9) gehalten wird, welche Verschlussvorrichtung einen Verschlusshaken (14) und einen Zentrierzapfen (15) umfasst, die an einem Lagerkörper (16) angebracht sind, wobei in der Schließstellung des Daches der Zentrierzapfen in eine korrespondierende Ausnehmung (20) in einen Aufnahmekörper des Querträgers hineinragt, **dadurch gekennzeichnet, dass** der Zentrierzapfen (15) unlösbar mit dem Lagerkörper (16) verbunden ist und aus einem formsteifen, jedoch definiert plastisch verformbaren Kunststoff besteht und sich, auf die Schließstellung des Daches bezogen, in Richtung Ausnehmung (20) im Aufnahmekörper (21) verjüngt.

2. Verschlussvorrichtung nach Anspruch 1, **dadurch gekennzeichnet, dass** der Zentrierzapfen (15) stoff- und/oder formschlüssig mit dem Lagerkörper (16) verbunden ist.

3. Verschlussvorrichtung nach Anspruch 2, **dadurch gekennzeichnet, dass** der Zentrierzapfen (15) durch Umgießen, Umspritzen oder Umschäumen am Lagerkörper (16) ausgebildet ist.

4. Verschlussvorrichtung nach Anspruch 3, **dadurch gekennzeichnet, dass** der Lagerkörper (16) einen flächigen Körperabschnitt (24) mit einem Steg (25) umfasst, der in einen Schaft (19) des Zentrierzapfens (15) hineinragt.

5. Verschlussvorrichtung nach Anspruch 4, **dadurch gekennzeichnet, dass** der Lagerkörper (16) aus Metall besteht.

6. Verschlussvorrichtung nach den Ansprüchen 3 und 4, **dadurch gekennzeichnet, dass** der Zentrierzapfen (15) an winkelförmig zueinander verlaufenden Seiten (27 und 28) des Körperabschnitts (24) des Lagerkörpers (16) angeformt ist.

7. Verschlussvorrichtung nach Anspruch 6, **dadurch gekennzeichnet, dass** der Zentrierzapfen (15) mit einem Zentrierwandabschnitt (29) zumindest bereichsweise an einer Außenseite (31) des Körperabschnitts (24) des Lagerkörpers anliegt.

8. Verschlussvorrichtung nach den Ansprüchen 6 und 7, **dadurch gekennzeichnet, dass** der Zentrierzapfen (16) mit einem ersten Zentrierwandabschnitt (29) und einem zweiten Zentrierwandabschnitt (30) die Außenseite (31) und eine Innenseite (32) des Körperabschnitts (24) umgibt.

9. Verschlussvorrichtung nach Anspruch 4, **dadurch gekennzeichnet, dass** der Zentrierzapfen (15) an der Außenseite des Schafts (19) mit einer in Schließstellung des Daches zur Ausnehmung (20) hin gerichteten Verjüngung (22) versehen ist.

10. Verschlussvorrichtung nach Anspruch 9, **dadurch gekennzeichnet, dass** die Verjüngung (22) am Schaft (19) keilartig ausgebildet ist.

## Claims

1. Locking device for a movable roof of a passenger vehicle, which roof can be adjusted on a structure between a closed position and an open position and is retained in the closed position by means of the locking device on an upper transverse carrier (10) of a windscreen frame (9), which locking device comprises a locking hook (14) and a centring pin (15) which are fitted to a bearing member (16), wherein in the closed position of the roof the centring pin protrudes into a corresponding recess (20) in a receiving member of the transverse carrier, **characterised in that** the centring pin (15) is connected to the bearing member (16) in a non-releasable manner and comprises a plastics material which is inherently stable but which can be plastically deformed in a defined manner and which tapers, with respect to the closed position of the roof, in the direction of a recess (20) in the receiving member (21).

2. Locking device according to claim 1, **characterised in that** the centring pin (15) is connected to the bearing member (16) in a bonded and/or positive-locking manner.

3. Locking device according to claim 2, **characterised in that** the centring pin (15) is constructed by means of casting, injection-moulding or foam-encapsulating on the bearing member (16).

4. Locking device according to claim 3, **characterised in that** the bearing member (16) comprises a planar member portion (24) having a strip (25) which protrudes into a shaft (19) of the centring pin (15).

5. Locking device according to claim 4, **characterised in that** the bearing member (16) is made of metal.

6. Locking device according to claims 3 and 4, **characterised in that** the centring pin (15) is formed on sides (27 and 28) of the member portion (24) of the bearing member (16), which sides extend in an angled manner with respect to each other.

7. Locking device according to claim 6, **characterised in that** the centring pin (15) comprising a centring wall portion (29) is in abutment at least partially with an outer side (31) of the member portion (24) of the bearing member.

8. Locking device according to claims 6 and 7, **characterised in that** the centring pin (15) comprising a first centring wall portion (29) and a second centring wall portion (30) surrounds the outer side (31) and an inner side (32) of the member portion (24).

9. Locking device according to claim 4, **characterised in that** the centring pin (15) is provided on the outer side of the shaft (19) with a taper (22) which is directed in the closed position of the roof towards the recess (20).

10. Locking device according to claim 9, **characterised in that** the taper (22) on the shaft (19) is constructed in a wedge-like manner.

## Revendications

1. Dispositif de fermeture pour un toit mobile d'une voiture particulière, lequel toit mobile peut être ajusté au niveau d'une carrosserie entre une position fermée et une position ouverte et qui est maintenu dans la position fermée au moyen du dispositif de fermeture au niveau d'une traverse (10) supérieure d'un châssis de pare-brise (9), lequel dispositif de fermeture comprend un crochet de fermeture (14) et un tourillon de centrage (15), qui sont installés au niveau d'un corps de palier (16), le tourillon de centrage pénétrant dans un évidement (20) correspondant dans un corps de réception de la traverse lorsque le toit est dans la position fermée, **caractérisé en ce que** le tourillon de centrage (15) est assemblé de manière inamovible au corps de palier (16) et est constitué d'un plastique à forme rigide mais déformable plastiquement de manière définie et se rétrécit, par rapport à la position fermée du toit, en direction de l'évidement (20) dans le corps de réception (21).

2. Dispositif de fermeture selon la revendication 1, **caractérisé en ce que** le tourillon de centrage (15) est assemblé par liaison de matière et/ou par complémentarité de forme au corps de palier (16).

3. Dispositif de fermeture selon la revendication 2, **caractérisé en ce que** le tourillon de centrage (15) est réalisé par coulage, extrusion ou moussage au niveau du corps de palier (16).

4. Dispositif de fermeture selon la revendication 3, **caractérisé en ce que** le corps de palier (16) comprend un tronçon de corps (24) plat avec une traverse (25), qui pénètre dans une queue (19) du tourillon de centrage (15).

5. Dispositif de fermeture selon la revendication 4, **caractérisé en ce que** le corps de palier (16) est en métal.

6. Dispositif de fermeture selon les revendications 3 et 4, **caractérisé en ce que** le tourillon de centrage (15) est formé au niveau de côtés (27 et 28), s'étendant en formant un angle, du tronçon de corps (24) du corps de palier (16).

7. Dispositif de fermeture selon la revendication 6, **caractérisé en ce que** le tourillon de centrage (15) repose par un tronçon de paroi de centrage (29), au moins par endroits, contre un côté extérieur (31) du tronçon de corps (24) du corps de palier.

8. Dispositif de fermeture selon les revendications 6 et 7, **caractérisé en ce que** le tourillon de centrage (15) entoure, par un premier tronçon de paroi de centrage (29) et par un deuxième tronçon de paroi de centrage (30), le côté extérieur (31) et un côté intérieur (32) du tronçon de corps (24).

9. Dispositif de fermeture selon la revendication 4, **caractérisé en ce que** le tourillon de centrage (15) est muni, au niveau du côté extérieur de la queue (19), d'un rétrécissement (22) dirigé en direction de l'évidement (20) lorsque le toit est en position fermée.

10. Dispositif de fermeture selon la revendication 9, **caractérisé en ce que** le rétrécissement (22) au niveau de la queue (19) est réalisé à la manière d'un coin.
